# EUROPÄISCHE PATENTSCHRIFT

(11) **EP 3 575 630 B1**
(45) Veröffentlichungstag und Bekanntmachung des Hinweises auf die Patenterteilung: **12.05.2021**
(21) Anmeldenummer: 18174815.3
(22) Anmeldetag: 29.05.2018
(51) Int. Cl.: F16F 15/03, F16F 15/14, F03D 13/20, F16F 7/10

(54) **SCHWINGUNGSDÄMPFERANORDNUNG**
VIBRATION ABSORBING SYSTEM
SYSTÈME D'AMORTISSEMENT DE VIBRATIONS

(43) Veröffentlichungstag der Anmeldung: 04.12.2019
(73) Patentinhaber: Wölfel Engineering GmbH + Co. KG, 97204 Höchberg (DE)
(72) Erfinder: Engelhardt, Jürgen, 97249 Eisingen (DE); Katz, Sebastian, 97082 Würzburg (DE)
(74) Vertreter: Keil & Schaafhausen Patentanwälte PartGmbB

(56) Entgegenhaltungen:
- EP-A1- 2 696 072
- EP-A1- 3 085 986
- WO-A1-2017/121633
- WO-A2-2008/046780
- WO-A2-2009/068599
- DE-A1- 2 616 899
- DE-A1- 19 856 500
- US-A- 6 006 875

## Beschreibung

Die vorliegende Erfindung betrifft eine Schwingungsdämpfungsanordnung nach dem Oberbegriff des Anspruchs 1.

Eine derartige Schwingungsdämpferanordnung ist beispielsweise aus EP 3 085 986 A1 und EP 2 696 072 A1 bekannt. Dokument EP 3 085 986 A1 offenbart die Präambel des unabhängigen Anspruchs 1.

Eine derartige Schwingungsdämpfungsanordnung ist insbesondere für hohe und schlanke Bauwerke vorgesehen, um deren Schwingungen zu dämpfen. Bei derartigen Bauwerken handelt es sich beispielsweise um Türme von Windkraftanlagen, die eine Höhe über 100 Metern erreichen können und dabei einen möglichst geringen Durchmesser aufweisen sollen.

Die Schwingungsdämpfungsanordnung arbeitet nach dem Prinzip der Wirbelstromdämpfung. Wenn sich die Magnetfelderzeugungseinrichtung gegenüber der Leiteranordnung bewegt, induziert das Magnetfeld der Magnetfelderzeugungseinrichtung in der Leiteranordnung Wirbelströme, die aufgrund des Ohm'schen Widerstandes der Leiteranordnung in Wärme umgesetzt werden. Die dazu erforderliche Energie wird der Schwingung entzogen, so dass die Schwingungsdämpfungsanordnung die Schwingung des Bauwerks dämpfen kann.

Bei Windkraftanlagen und auch bei anderen hohen, schlanken Bauwerken, die einer Windbelastung ausgesetzt sind, ändert sich die Richtung der Belastung und damit auch die Richtung der Schwingungsanregung und der Schwingungen.

Der Erfindung liegt die Aufgabe zugrunde, eine Dämpfung von Schwingungen bei einem hohen, schlanken Bauwerk in allen Richtungen zu ermöglichen.

Diese Aufgabe wird bei einer Schwingungsdämpfungsanordnung der eingangs genannten Art mit den Merkmalen des Anspruchs 1 gelöst.

Das Pendel kann also nicht nur in eine Raumrichtung pendeln, sondern durch die Überlagerung der beiden Raumrichtungen in alle Richtungen, die radial vom Gelenkpunkt ausgehen und parallel zur Schwerkraftrichtung gerichtet sind. Die Magnetfelderzeugungseinrichtung beschreibt dabei eine Bewegung nach Art einer Kreisbewegung um den Gelenkpunkt herum. Da die Leiteranordnung sphärisch ausgebildet ist, wird die Magnetfelderzeugungseinrichtung tangential zu der Leiteranordnung geführt. Wenn die Leiteranordnung sphärisch ausgebildet ist, dann folgt sie der Oberfläche einer Kugel. Die Dämpfung der Schwingung erfolgt also über die gesamte Länge der Pendelbewegung.

Vorzugsweise weist die Leiteranordnung einen Krümmungsmittelpunkt auf, der mit dem Gelenkpunkt übereinstimmt. Damit wird auf relativ einfache Weise erreicht, dass ein Abstand zwischen der Leiteranordnung und der Magnetfelderzeugungseinrichtung über die gesamte Pendelbewegung konstant gehalten werden kann, ohne dass zusätzliche Maßnahmen erforderlich sind. Insbesondere ist eine Führung der Magnetfelderzeugungseinrichtung gegenüber der Leiteranordnung nicht erforderlich. Der Abstand wird durch das Pendel selbst beibehalten. Damit entfallen Verschleißteile zwischen der Magnetfelderzeugungseinrichtung und der Leiteranordnung.

Vorzugsweise ist die Leiteranordnung als offene Kugelkalotte ausgebildet. Die Leiteranordnung wird also durch eine Fläche aus einem leitenden Material gebildet. Die Leiteranordnung kann beispielsweise durch Drücken oder durch Tiefziehen einer Metall-Ronde hergestellt werden. Sie ist vorzugsweise aus einem elektrisch gut leitenden Material, wie Aluminium oder Kupfer, gebildet.

Bevorzugterweise weist die Kugelkalotte einen versteiften Rand auf. Der versteifte Rand kann verwendet werden, um die Kugelkalotte gegen die Kräfte abzustützen, die bei der Pendelbewegung des Pendels entstehen. Der versteifte Rand verhindert dabei, dass sich die Kugelkalotte verformt.

Vorzugsweise weist der Rand einen Flansch auf und ist mit einem Verstärkungselement verbunden. Die Ausbildung des Flansches kann bei der Herstellung der Leiteranordnung erfolgen. Das Verstärkungselement kann beispielsweise durch einen Ring gebildet sein, der aus Stahl oder einem anderen belastbaren Material gebildet ist. Mit dem Flansch oder mit dem Verstärkungselement kann die Kugelkalotte dann an der Struktur befestigt werden, deren Schwingungen gedämpft werden sollen.

Vorzugsweise weist die Magnetfelderzeugungseinrichtung beidseits der Leiteranordnung jeweils eine Magnetbaugruppe auf. Das Pendel ist in der Regel in Schwerkraftrichtung senkrecht aufgehängt, so dass man vereinfacht von einer oberen und einer unteren Magnetbaugruppe sprechen kann. Durch die Verwendung der beiden Magnetbaugruppen ist es möglich, ein Magnetfeld zu erzeugen, bei dem der Luftspalt, den das Magnetfeld überwinden muss, möglichst klein gehalten werden kann.

Vorzugsweise sind die Magnetbaugruppen durch einen Abstandshalter miteinander verbunden. Der Abstandshalter sorgt dann dafür, dass die Magnetbaugruppen einen definierten Abstand zueinander haben. In diesem Abstand befindet sich dann die Leiteranordnung. Wenn der Gelenkpunkt mit dem Krümmungsmittelpunkt der Leiteranordnung übereinstimmt, kann man gewährleisten, dass über die gesamte Pendelbewegung nicht nur ein konstanter Abstand zwischen den beiden Magnetbaugruppen sondern auch ein konstanter Luftspalt vorliegt, so dass die Dämpfung über die gesamte Pendelbewegung ebenfalls konstant gehalten werden kann. Durch die Dämpfung werden also keine weiteren Störungen in die Schwingungen eingetragen.

Vorzugsweise weist jede Magnetbaugruppe eine Mehrzahl von Magnetmodulen auf, die mit einem Träger verbunden sind. Die Magnetmodule können baugleich sein. Hierbei besteht die Möglichkeit, durch eine Änderung der Anzahl der Magnetmodule in Umfangsrichtung das Maß der Dämpfung zu beeinflussen. Jedes Magnetmodul weist beispielsweise mindestens ein Polpaar auf. Zwei sich gegenüberliegende Magnetmodule können um 180° relativ zueinander verdreht sein, so dass sich die gegenüberliegenden Polpaare der beiden Magnetmodule gegenseitig anziehen.

Vorzugsweise sind die Magnetmodule in Bezug auf den Träger einstellbar montiert. Wenn man die Magnetmodule relativ zum Träger in radialer Richtung verschiebt, dann kann man den Abstand zwischen den Magnetmodulen und der Leiteranordnung verändern. Eine entsprechende Einstellmöglichkeit ergibt sich dann, wenn man die Magnetmodule auch parallel zur Ruhelage des Pendels verschieben kann. Die radiale Einstellung ist jedoch einfacher. Die Einstellbarkeit lässt sich auf einfache Weise beispielsweise dadurch realisieren, dass der Träger Langlöcher aufweist, die radial gerichtet sind, so dass sich eine Änderung der radialen Position der Magnetmodule erreichen lässt.

Vorzugsweise ist mindestens ein Magnetmodul über einen Winkeladapter mit dem Träger verbunden. Mit dem Winkeladapter ist es möglich, die Magnetmodule tangential zu der Leiteranordnung auszurichten. Durch die Verwendung von unterschiedlichen Winkeladaptern ist es auf einfache Weise möglich, die Schwingungsdämpfungsanordnung bei gleichem Grundaufbau mit verschiedenen Leiteranordnungen zu verwenden, die unterschiedliche Krümmungsradien haben.

Vorzugsweise weist mindestens ein Magnetmodul eine Schutzkappe aus einem nicht magnetischen Material auf. Das nicht magnetische Material beeinflusst das Magnetfeld nicht. Die Schutzkappe ermöglicht es aber, das Magnetmodul gegen mechanische Belastungen, beispielsweise Schläge oder Stöße, zu schützen. Weiterhin kann auf einfache Weise ein gewisser Schutz gegen Korrosion des Magnetmaterials erreicht werden. Dies ist insbesondere dann von Vorteil, wenn Permanentmagnete verwendet werden, die aus Seltenerdmetallen gebildet sind. Derartige Permanentmagnete sind relativ stoßempfindlich. Auch bei der Verwendung von Elektromagneten kann eine Schutzkappe Vorteile haben, um beispielsweise Wicklungen zu schützen.

Vorzugsweise weist die Leiteranordnung eine zentrische Öffnung auf, die von einem Innenrand begrenzt ist, wobei der Innenrand in einer nicht ausgelenkten Stellung des Pendels im Bereich der Mitte der Magnetmodule in tangentialer Richtung der Pendelbewegung angeordnet ist. Mit einer derartigen Ausbildung wird auf relativ einfache Weise erreicht, dass man unabhängig von der Auslenkung des Pendels eine etwa gleich große Fläche der Leiteranordnung dem Magnetfeld der Magnetfelderzeugungseinrichtung ausgesetzt ist, so dass die Wirbelstromdämpfung über die gesamte Pendelbewegung gleich gehalten werden kann. Eine mathematische Genauigkeit ist allerdings nicht erforderlich. Kleinere Schwankungen bei der Dämpfung sind akzeptabel.

In einer bevorzugten Ausgestaltung ist vorgesehen, dass eine Reinigungseinrichtung vorgesehen ist, die zwischen der Magnetfelderzeugungseinrichtung und der Leiteranordnung wirkt. Eine derartige Reinigungseinrichtung verhindert, dass sich Fremdkörper, beispielsweise metallische Späne, im Luftspalt zwischen der Leiteranordnung und der Magnetfelderzeugungseinrichtung festsetzen können. Eine derartige Ausgestaltung ist insbesondere bei Windkraftanlagen von Vorteil, die in rauen klimatischen Bedingungen aufgestellt sind. Hier lässt sich eine hermetische Abdichtung der Schwingungsdämpfungsanordnung mit vertretbarem Aufwand praktisch nicht erreichen. Die Reinigungseinrichtung ermöglicht es dann, den Luftspalt "sauber" zu halten.

Hierbei ist bevorzugt, dass die Reinigungseinrichtung eine Bürstenanordnung aufweist, die an der Leiteranordnung und/oder an der Magnetfelderzeugungseinrichtung anliegt. Wenn sich die Magnetfelderzeugungseinrichtung gegenüber der Leiteranordnung bewegt, dann werden Verunreinigungen abgestreift.

Vorzugsweise weist der Gelenkpunkt ein Kardangelenk auf. Bei einem derartigen Kardangelenk kann man zwei Schwenkachsen vorsehen. Wenn die beiden Schwenkachsen in einer gemeinsamen Ebene liegen, ergibt sich ein einzelner Punkt, um den das Pendel in alle Raumrichtungen schwingen kann.

Die Erfindung wird im Folgenden anhand eines bevorzugten Ausführungsbeispiels in Verbindung mit der Zeichnung beschrieben. Hierin zeigen:
- Fig. 1: eine perspektivische Darstellung einer Schwingungsdämpferanordnung,
- Fig. 2: eine schematische Schnittansicht durch die Schwingungsdämpfungsanordnung in nicht ausgelenkter Stellung und
- Fig. 3: eine Ansicht entsprechend Fig. 2 in ausgelenkter Stellung.

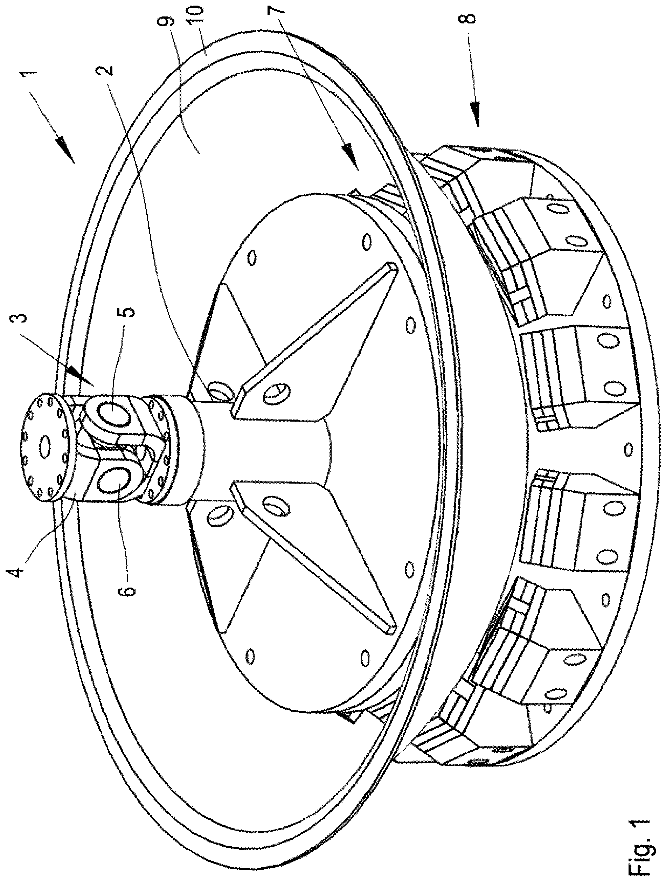

Fig. 1 zeigt eine Schwingungsdämpfungsanordnung 1 mit einem Pendel 2, das an einem Gelenkpunkt 3 pendelnd gelagert ist. Der Gelenkpunkt 3 ist durch ein Kardangelenk 4 mit zwei Achsen 5, 6 gebildet, die senkrecht zur Schwerkraftrichtung in einer Ebene liegen. Dadurch kann das Pendel 2 in einer Ebene, die senkrecht zur Schwerkraftrichtung verläuft, in alle Richtungen pendeln.

Die Schwingungsdämpfungsanordnung weist eine Magnetfelderzeugungseinrichtung auf, von der in Fig. 1 eine obere Magnetbaugruppe 7 und eine untere Magnetbaugruppe 8 zu erkennen ist. Ferner weist die Schwingungsdämpfungsanordnung 1 eine Leiteranordnung 9 aus einem elektrisch leitenden Material auf. Die Leiteranordnung 9 hat die Form einer nach oben offenen Kugelkalotte, d.h. die Leiteranordnung 9 bildet einen Teil einer Oberfläche einer Kugel. Der Mittelpunkt dieser Kugel stimmt mit dem Gelenkpunkt 3 überein. Gewisse mechanische Toleranzen sind dabei zulässig.

Die Kugelkalotte der Leiteranordnung 9 weist an ihrem oberen Rand einen Flansch 10 auf, der den Rand versteift. In nicht näher dargestellter Weise kann an dem Flansch 10 auch noch ein Verstärkungselement befestigt sein, beispielsweise ein Ring aus Stahl oder einem anderen entsprechend stabilen Material. Die Leiteranordnung 9 kann dann mit dem Flansch oder dem Verstärkungselement an einer tragenden Struktur befestigt sein, deren Schwingungen gedämpft werden sollen.

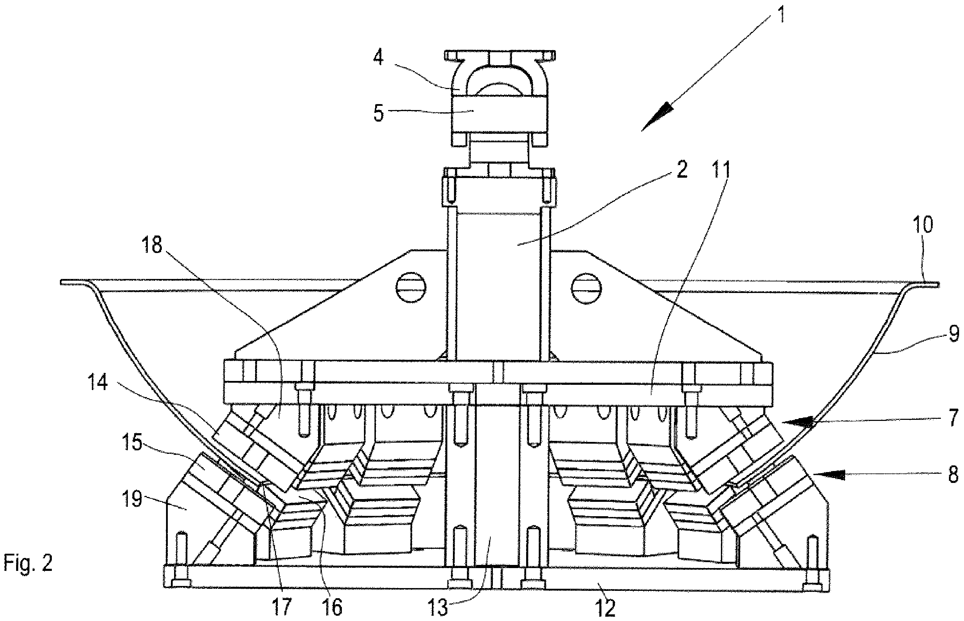

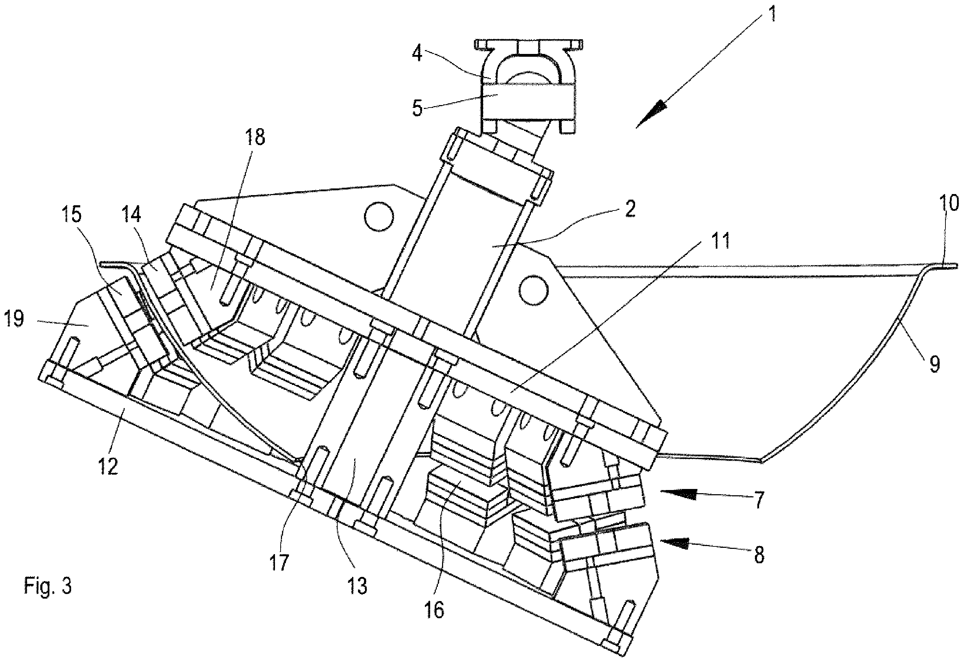

Fig. 2 und 3 zeigen weitere Einzelheiten der Schwingungsdämpfungsanordnung.

Das Pendel 2 weist einen oberen Träger 11 und einen unteren Träger 12 auf, die durch einen Abstandshalter 13 miteinander verbunden sind. Der Abstandshalter 13 ist vorzugsweise zylindrisch und hat einen möglichst kleinen Durchmesser. An einem oder beiden der Träger 11, 12, vorzugsweise am unteren Träger 12, können noch zusätzliche Massenelemente, beispielsweise in Form von Massenscheiben, angebracht sein, um die Masse und die Schwerpunktlage des Pendels anzupassen.

Die obere Magnetbaugruppe 7 ist an dem oberen Träger 11 befestigt und die untere Magnetbaugruppe 8 ist an dem unteren Träger 12 befestigt.

Jede Magnetbaugruppe 7, 8 weist eine Vielzahl von Magnetmodulen auf, nämlich obere Magnetmodule 14 in der oberen Magnetbaugruppe 7 und untere Magnetmodule 15 in der unteren Magnetbaugruppe 8. Jedes Magnetmodul 14, 15 weist beispielsweise ein Polpaar mit einem Nordpol und einem Südpol auf.

Die Magnetmodule sind so angeordnet, dass das Polpaar des oberen Magnetmoduls 14 und das Polpaar des unteren Magnetmoduls 15, sich gegenüberliegen und um 180° gegeneinander verdreht sind, so dass ein Nordpol eines oberen Magnetmoduls 14 einem Südpol eines unteren Magnetmoduls 15 und umgekehrt gegenüber liegt. Zwischen den oberen Magnetmodulen 14 und den unteren Magnetmodulen 15 ist ein Luftspalt 16 ausgebildet, in den die Leiteranordnung 9 hineinragt.

Die Leiteranordnung weist eine zentrische Öffnung auf, die von einem Innenrand 17 begrenzt ist. Der Innenrand ist in der in Fig. 2 dargestellten nicht ausgelenkten Stellung des Pendels 2 im Bereich der Mitte der Magnetmodule 14, 15 in tangentialer Richtung, also in Richtung der Pendelbewegung, angeordnet. Damit wird erreicht, dass unabhängig von der Auslenkung des Pendels 2 immer eine etwa gleich große Fläche der Leiteranordnung 9 dem Magnetfeld der Magnetfelderzeugungseinrichtung ausgesetzt ist, das durch die obere Magnetbaugruppe 7 und die untere Magnetbaugruppe 8 gebildet ist.

Die oberen Magnetmodule 14 sind an oberen Winkeladaptern 18 montiert und die unteren Magnetmodule 15 sind an unteren Winkeladaptern 19 montiert. Die Winkeladapter 18, 19 ermöglichen auf einfache Weise eine tangentiale Ausrichtung der Magnetmodule 14, 15 relativ zu der Leiteranordnung 9. Wenn man eine Leiteranordnung 9 mit einem anderen Krümmungsradius verwendet, ist es lediglich notwendig, andere Winkeladapter 18, 19 zu verwenden, um erneut eine tangentiale Ausrichtung der Magnetmodule 14, 15 zu der Leiteranordnung 9 zu erreichen.

Der obere Träger 11 und der untere Träger 12 können zur Befestigung der Winkeladapter 18, 19 (oder, wenn die Magnetmodule 14, 15 auf andere Weise an den Trägern 11, 12 befestigt sind zur Befestigung der Magnetmodule 14, 15) Langlöcher aufweisen, die radial ausgerichtet sind. Dadurch ist es möglich, die Magnetmodule 14, 15 relativ zu der Leiteranordnung radial in unterschiedlichen Positionen zu montieren und damit sicherzustellen, dass man den Luftspalt zwischen den Magnetmodulen 14, 15 und der Leiteranordnung 9 möglichst klein machen kann. Je kleiner der Luftspalt ist, desto besser ist die dämpfende Wirkung der Schwingungsdämpfungsanordnung 1. Die Verwendung von einzelnen Magnetmodulen 14, 15 hat den Vorteil, dass man in Abhängigkeit von der gewünschten Dämpfungswirkung mehr oder weniger Module 14, 15 verwenden kann.

In nicht dargestellter Weise können die Magnetmodule 14, 15 auch mit einer Schutzkappe aus einem nicht magnetischen Material versehen sein. Die Schutzkappe stört dann das von den Magnetmodulen 14, 15 durch die Leiteranordnung hindurch erzeugte Feld nicht, schützt aber die Magnetmodule 14, 15 vor Korrosion und/oder einer mechanischen Beschädigung, die beispielsweise durch Stöße oder Schläge erfolgen könnte.

Im vorliegenden Ausführungsbeispiel sind die Magnetmodule 14, 15 mit Permanentmagneten ausgebildet. Es ist aber auch möglich, die Magnetmodule 14, 15 mit Elektromagneten auszubilden.

In nicht näher dargestellter Weise kann auch eine Reinigungseinrichtung vorgesehen sein, die zwischen der Magnetfelderzeugungseinrichtung und der Leiteranordnung wirkt. Die Reinigungseinrichtung kann beispielsweise eine Bürstenanordnung aufweisen, die an der Leiteranordnung befestigt ist und bei einer Bewegung des Pendels 2 über die Magnetmodule 14, 15 streift. Es ist aber auch möglich, die Bürstenanordnung an den Magnetmodulen 14, 15 zu befestigen, so dass sie bei einer Pendelbewegung des Pendels 2 über die Leiteranordnung 9 streift. Selbstverständlich ist auch eine Kombination beider Maßnahmen denkbar. Damit ist es möglich, Fremdkörper aus dem Luftspalt zu entfernen.

Das Pendel 2 gewährleistet einen definierten Abstand zwischen der oberen Magnetbaugruppe 7 und der Leiteranordnung 9. Wenn der Krümmungsmittelpunkt der Leiteranordnung 9 mit dem Gelenkpunkt 3 übereinstimmt, wird dieser Abstand über die gesamte Pendelbewegung konstant gehalten. Der Abstandshalter 13 gewährleistet einen konstanten Abstand zwischen der oberen Magnetbaugruppe 7 und der unteren Magnetbaugruppe 8 und damit einen entsprechenden definierten Abstand zwischen der unteren Magnetbaugruppe 8 und der Leiteranordnung 9. Weitere Maßnahmen sind nicht erforderlich. Insbesondere können Verschleißteile entfallen, weil die Schwingungsdämpfungsanordnung jedenfalls im Bereich von Magnetfelderzeugungseinrichtung und Leiteranordnung 9 berührungslos arbeitet.

Im Betrieb, d.h. wenn das Pendel 2 pendelt, bewegt sich das durch die Magnetfelderzeugungseinrichtung, d.h. die Magnetbaugruppen 7, 8, erzeugte Magnetfeld durch die Leiteranordnung 9 und induziert dort Wirbelströme, die aufgrund des Ohm'schen Widerstands der Leiteranordnung 9 wiederum Wärme freisetzen. Die hierzu erforderliche Energie wird der Pendelbewegung entzogen. Die Schwingungsdämpfungsanordnung arbeitet also nach dem Prinzip der Wirbelstromdämpfung.

Die Leiteranordnung 9 ist vorzugsweise aus einem elektrisch gut leitfähigen Material gebildet, beispielsweise Kupfer oder Aluminium. Sie kann durch Drücken oder durch Tiefziehen einer Metall-Ronde hergestellt werden. Dabei kann gleichzeitig der Flansch 10 mit ausgebildet werden.

Fig. 3 zeigt die Schwingungsdämpfungsanordnung in ausgelenkter Position. Man kann erkennen, dass die Auslenkung lediglich durch das Zusammenwirken des Abstandshalters 13 mit dem Innenrand 17 der Leiteranordnung 9 begrenzt wird.

Die Darstellung in der Zeichnung ist nicht maßgeblich. Üblicherweise ist das Pendel 2 deutlich länger bzw. es sind noch zusätzliche Massenelemente am Pendel, beispielsweise am unteren Träger 12, vorhanden. Dargestellt ist eine Ausführungsform, bei der die Leiteranordnung 9 stationär und die Magnetfelderzeugungseinrichtung 7, 8 am Pendel 2 angeordnet sind, Es ist jedoch auch möglich, die Leiteranordnung 9 am Pendel 2 zu befestigen und die Magnetfelderzeugungseinrichtung 7, 8 stationär zu halten. In beiden Fällen lässt sich eine Schwingungsdämpfung durch Wirbelströme erreichen.

## Patentansprüche

1. Schwingungsdämpfungsanordnung (1) mit einem Pendel (2), das an einem Gelenkpunkt (3) pendelnd gelagert ist, einer Magnetfelderzeugungseinrichtung und einer Leiteranordnung (9), die im Magnetfeld der Magnetfelderzeugungseinrichtung angeordnet ist, wobei entweder die Magnetfelderzeugungseinrichtung oder die Leiteranordnung (9) an dem Pendel (2) befestigt ist, **dadurch gekennzeichnet, dass** das Pendel (2) im Gelenkpunkt (3) in zwei Raumrichtungen pendelnd gelagert ist und die Leiteranordnung (9) sphärisch ausgebildet ist.

2. Schwingungsdämpfungsanordnung nach Anspruch 1, **dadurch gekennzeichnet, dass** die Leiteranordnung (9) einen Krümmungsmittelpunkt aufweist, der mit dem Gelenkpunkt (3) übereinstimmt.

3. Schwingungsdämpfungsanordnung nach Anspruch 1 oder 2,
**dadurch gekennzeichnet, dass** die Leiteranordnung (9) als offene Kugelkalotte ausgebildet ist.

4. Schwingungsdämpfungsanordnung nach Anspruch 3, **dadurch gekennzeichnet, dass** die Kugelkalotte einen versteiften Rand aufweist.

5. Schwingungsdämpfungsanordnung nach Anspruch 4, **dadurch gekennzeichnet, dass** der Rand einen Flansch (10) aufweist und mit einem Verstärkungselement verbunden ist.

6. Schwingungsdämpfungsanordnung nach einem der Ansprüche 1 bis 5, **dadurch gekennzeichnet, dass** die Magnetfelderzeugungseinrichtung beidseits der Leiteranordnung jeweils eine Magnetbaugruppe (7, 8) aufweist.

7. Schwingungsdämpfungsanordnung nach Anspruch 6, **dadurch gekennzeichnet, dass** die Magnetbaugruppen (7, 8) durch einen Abstandshalter (13) miteinander verbunden sind.

8. Schwingungsdämpfungsanordnung nach Anspruch 6 oder 7,
**dadurch gekennzeichnet, dass** jede Magnetbaugruppe (7, 8) eine Mehrzahl von Magnetmodulen (14, 15) aufweist, die mit einem Träger (11, 12) verbunden sind.

9. Schwingungsdämpfungsanordnung nach Anspruch 8, **dadurch**
**gekennzeichnet, dass** die Magnetmodule (14, 15) in Bezug auf den Träger (11, 12) einstellbar montiert sind.

10. Schwingungsdämpfungsanordnung nach Anspruch 8 oder 9,
**dadurch gekennzeichnet, dass** mindestens ein Magnetmodul (14, 15) über einen Winkeladapter (18, 19) mit dem Träger (11, 12) verbunden ist.

11. Schwingungsdämpfungsanordnung nach einem der Ansprüche 8 bis 10, **dadurch gekennzeichnet, dass** mindestens ein Magnetmodul (14, 15) eine Schutzkappe aus einem nichtmagnetischen Material aufweist.

12. Schwingungsdämpfungsanordnung nach einem der Ansprüche 8 bis 11, **dadurch gekennzeichnet, dass** die Leiteranordnung (9) eine zentrische Öffnung aufweist, die von einem Innenrand (17) begrenzt ist, wobei der Innenrand (17) in einer nicht ausgelenkten Stellung des Pendels (2) im Bereich der Mitte der Magnetmodule (14, 15) in tangentialer Richtung der Pendelbewegung angeordnet ist.

13. Schwingungsdämpfungsanordnung nach einem der Ansprüche 1 bis 12, **dadurch gekennzeichnet, dass** eine Reinigungseinrichtung vorgesehen ist, die zwischen der Magnetfelderzeugungseinrichtung und der Leiteranordnung (9) wirkt.

14. Schwingungsdämpfungsanordnung nach Anspruch 13, **dadurch gekennzeichnet, dass** die Reinigungseinrichtung eine Bürstenanordnung aufweist, die an der Leiteranordnung (9) und/oder an der Magnetfelderzeugungseinrichtung anliegt.

15. Schwingungsdämpfungsanordnung nach einem der Ansprüche 1 bis 14, **dadurch gekennzeichnet, dass** das der Gelenkpunkt (3) ein Kardangelenk (4) aufweist.

## Claims

1. A vibration damping arrangement (1) comprising a pendulum (2) which is pendular-mounted at a pivot point (3), a magnetic field generating device and a conductor arrangement (9) which is arranged in the magnetic field of the magnetic field generating device, wherein either the magnetic field generating device or the conductor arrangement (9) is fastened to the pendulum (2), **characterized in that** the pendulum (2) is pendular-mounted in two spatial directions at the pivot point (3) and the conductor arrangement (9) is formed spherically.

2. The vibration damping arrangement according to claim 1, **characterized in that** the conductor arrangement (9) has a center of curvature which coincides with the pivot point (3).

3. The vibration damping arrangement according to claim 1 or 2, **characterized in that** the conductor arrangement (9) is formed as an open spherical cap.

4. The vibration damping arrangement according to claim 3, **characterized in that** the spherical cap has a reinforced edge.

5. The vibration damping arrangement according to claim 4, **characterized in that** the edge has a flange (10) and is connected to a reinforcing element.

6. The vibration damping arrangement according to any one of claims 1 to 5, **characterized in that** on both sides of the conductor arrangement, the magnetic field generating device has in each case one magnet assembly (7, 8) .

7. The vibration damping arrangement according to claim 6, **characterized in that** the magnet assemblies (7, 8) are connected to one another by a spacer (13).

8. The vibration damping arrangement according to claim 6 or 7, **characterized in that** each magnet assembly (7, 8) comprises a plurality of magnet modules (14, 15) connected to a support (11, 12).

9. The vibration damping arrangement according to claim 8, **characterized in that** the magnet modules (14, 15) are mounted to be adjustable with respect to the support (11, 12) .

10. The vibration damping arrangement according to claim 8 or 9, **characterized in that** at least one magnet module (14, 15) is connected to the support (11, 12) via an angle adapter (18, 19).

11. The vibration damping arrangement according to any one of claims 8 to 10, **characterized in that** at least one magnet module (14, 15) has a protective cap made of a non-magnetic material.

12. The vibration damping arrangement according to any one of claims 8 to 11, **characterized in that** the conductor arrangement (9) has a central opening which is delimited by an inner edge (17), the inner edge (17) being arranged in a non-deflected position of the pendulum (2) in the region of the center of the magnet modules (14, 15) in the tangential direction of the pendulum movement.

13. The vibration damping arrangement according to any one of claims 1 to 12, **characterized in that** a cleaning device is provided which acts between the magnetic field generating device and the conductor arrangement (9).

14. The vibration damping arrangement according to claim 13, **characterized in that** the cleaning device has a brush arrangement which rests against the conductor arrangement (9) and/or against the magnetic field generating device.

15. The vibration damping arrangement according to any one of claims 1 to 14, **characterized in that** the pivot point (3) has a universal joint (4).

## Revendications

1. Système d'amortissement de vibrations (1) avec un pendule (2), qui est logé oscillant sur un point d'articulation (3), un dispositif de production de champ magnétique et un système conducteur (9), qui est disposé dans le champ magnétique du dispositif de production de champ magnétique, sachant que, soit le dispositif de production de champ magnétique, soit le système conducteur (9), est fixé au pendule (2), **caractérisé en ce que** le pendule (2) est logé oscillant dans le point d'articulation (3) dans deux directions spatiales et le système conducteur (9) est constitué sphérique.

2. Système d'amortissement de vibrations selon la revendication 1, **caractérisé en ce que** le système conducteur (9) comporte un point médian de courbure, qui coïncide avec le point d'articulation (3).

3. Système d'amortissement de vibrations selon la revendication 1 ou 2, **caractérisé en ce que** le système conducteur (9) est constitué sous la forme d'une calotte sphérique ouverte.

4. Système d'amortissement de vibrations selon la revendication 3, **caractérisé en ce que** la calotte sphérique comporte un bord renforcé.

5. Système d'amortissement de vibrations selon la revendication 4, **caractérisé en ce que** le bord comporte une bride (10) et est relié à un élément de renfort.

6. Système d'amortissement de vibrations selon l'une quelconque des revendications 1 à 5, **caractérisé en ce que** le dispositif de production de champ magnétique comporte des deux côtés du système conducteur respectivement un ensemble magnétique (7, 8).

7. Système d'amortissement de vibrations selon la revendication 6, **caractérisé en ce que** les ensembles magnétiques (7, 8) sont reliés l'un à l'autre par un support d'écartement (13).

8. Système d'amortissement de vibrations selon la revendication 6 ou 7, **caractérisé en ce que** chaque ensemble magnétique (7, 8) comporte une pluralité de modules magnétiques (14, 15), qui sont reliés à un support (11, 12).

9. Système d'amortissement de vibrations selon la revendication 8, **caractérisé en ce que** les modules magnétiques (14, 15) sont montés réglables par rapport au support (11, 12).

10. Système d'amortissement de vibrations selon la revendication 8 ou 9, **caractérisé en ce qu'**au moins un module magnétique (14, 15) est relié au support (11, 12) par le biais d'un adaptateur d'angle (18, 19).

11. Système d'amortissement de vibrations selon l'une quelconque des revendications 8 à 10, **caractérisé en ce qu'**au moins un module magnétique (14, 15) comporte un capuchon de protection dans un matériau non magnétique.

12. Système d'amortissement de vibrations selon l'une quelconque des revendications 8 à 11, **caractérisé en ce que** le système conducteur (9) comporte une ouverture centrale, qui est limitée par un bord intérieur (17), sachant que le bord intérieur (17) est disposé dans une position non déviée du pendule (2) dans la zone du centre des modules magnétiques (14, 15) en direction tangentielle du mouvement pendulaire.

13. Système d'amortissement de vibrations selon l'une quelconque des revendications 1 à 12, **caractérisé en ce qu'**un dispositif de nettoyage est prévu, qui agit entre le dispositif de production de champ magnétique et le système conducteur (9).

14. Système d'amortissement de vibrations selon la revendication 13, **caractérisé en ce que** le dispositif de nettoyage comporte un système à balais, qui s'applique au système conducteur (9) et/ou au dispositif de production de champ magnétique.

15. Système d'amortissement de vibrations selon l'une quelconque des revendications 1 à 14, **caractérisé en ce que** le point d'articulation (3) comporte un joint de cardan (4).
